# EUROPEAN PATENT SPECIFICATION

(11) **EP 3 647 186 B1**
(45) Date of publication and mention of the grant of the patent: **04.05.2022**
(21) Application number: 17915408.3
(22) Date of filing: 31.07.2017
(51) Int. Cl.: B64C 25/26, B64C 25/10, B64C 39/02, B64C 27/08, F16M 11/30

(54) **SUPPORT FRAME, STAND ASSEMBLY, AND UNMANNED AERIAL VEHICLE**
TRAGRAHMEN, STÄNDERANORDNUNG UND UNBEMANNTES LUFTFAHRZEUG
CADRE DE SUPPORT, ENSEMBLE POSTE DE STATIONNEMENT ET VÉHICULE AÉRIEN SANS PILOTE

(30) Priority: 29.06.2017 CN 201720773693 U
(43) Date of publication of application: 06.05.2020
(73) Proprietor: SZ DJI Technology Co., Ltd., Shenzhen, Guangdong 518057 (CN)
(72) Inventor: MO, Songquan, Shenzhen, Guangdong 518057 (CN); LI, Luxin, Shenzhen, Guangdong 518057 (CN); HU, Ben, Shenzhen, Guangdong 518057 (CN)
(74) Representative: Goddar, Heinz J.
(86) International application number: PCT/CN2017/095252
(87) International publication number: WO 2019/000549

(56) References cited:
- EP-A1- 0 705 758
- WO-A1-2015/022433
- CA-A1- 2 578 809
- CN-A- 106 114 841
- CN-U- 205 524 944
- DE-U- 1 988 431
- DE-U1- 8 804 400
- DE-U1- 9 213 835
- US-A1- 2014 037 278
- US-A1- 2016 186 919
- US-A1- 2016 272 308

## Description

### TECHNICAL FIELD

The present disclosure relates to the technology field of unmanned aerial vehicles ("UAV") and, more particularly, to a support frame, a stand assembly, and a UAV.

### BACKGROUND TECHNOLOGY

As the technologies continuously advance, smart devices such as UAVs have been widely used in people's daily life.

Currently, to support the UAV, a stand is generally provided at a lower portion of an aircraft body of the UAV. The stand may support the aircraft body of the UAV at a specific height away from the ground, to prevent direct contact between the aircraft body and the ground, and in the meantime, make it convenient to mount devices carried by the UAV, such as a camera, under the aircraft body.

However, as the UAVs are continuously made to be more and more portable, the height and the volume of the stand need to be reduced. However, when the UAV carries a relatively large device, due to the insufficient height of the stand, it may be necessary to replace an existing stand with a relatively longer stand.

WO 2015/022433 A1 describes a stabilization system or gimbal having a mounting arrangement for a camera providing for rotation about pan, roll, and tilt axes where tilt and roll axis position can be independently adjusted. The arrangement can be configured so that when adjusting the stabilization frame relative to the roll axis, adjustment of the camera COG relative to the tilt axis is inhibited. The system can further be arranged such that when adjusting the roll axis, adjustment relative to the tilt axis is inhibited. Similarly, when adjusting the pan axis, adjustment to the tilt or roll axes may be inhibited.

US 2016/186919 A1 describes a locking device. The locking device may include a quick release coupling board, a sliding assembly slidably connected with the sliding assembly, and a locking assembly connected to the sliding assembly and configured to lock the quick release coupling board to the sliding assembly.

US 2016/272308 A1 describes a configuration of an unmanned aerial vehicle (UAV) landing gear assembly that includes adjustable landing gear extension that may be extended or contracted so that the body of the UAV is contained in a horizontal plane when the UAV is landed, even on sloping surfaces. For example, when a UAV is landing, the slope of the surface may be determined and the landing gear extensions adjusted based on the slope so that the body of the UAV remains approximately horizontal when the UAV lands and is supported by the landing gear extensions.

US 2014/037278 A1 describes an apparatus and related methods for stabilizing a payload device such as an imaging device.

### CONTENT OF THE PRESENT DISCLOSURE

The present invention relates to a support frame according to claim 1, a stand assembly according to claim 9, and an unmanned aerial vehicle according to claim 10. Claims 2 to 8 refer to particularly advantageous realizations of the support frame according to claim 1.

Embodiments of the present disclosure provide a support frame, a stand assembly, and a UAV. The height of the stand assembly can be adjusted based on actual needs.

In a first aspect, the present disclosure provides a support frame, including a locking assembly and at least two support rods. The locking assembly includes a first locking frame and a locking block. The at least two support rods are disposed on the first locking frame. The first locking frame is slidable relative to and along at least one support rod. The at least two support rods include at least one first support rod and at least one second support rod. The locking block is configured to be movable along a direction perpendicular to an axial direction of the second support rod and to tightly express onto the second support rod, to lock the second support rod at a current location relative to the axial direction of the first support rod.

The first locking frame includes at least one through hole. The second support rod corresponds to the through hole one on one and is extendedly disposed in the through hole. A wall of the through hole is provided with a through groove. The locking block is located in the through groove. The locking block is movable along a cross-sectional direction of the through hole relative to the first locking frame and can lock at at least one location in the cross-sectional direction of the through hole. The locking block is configured to tightly press, together with a wall of the through hole opposite the through groove, the second support rod at the current location in the axial direction.

Optionally, the support frame also includes a nylon sleeve tube having a variable diameter. The nylon sleeve tube is disposed inside the through hole where the second support rod is located. The locking block tightly presses an outer surface of the nylon sleeve tube, to tightly press the second support rod at the current location in the axial direction.

Optionally, the locking block includes an arc shaped surface that matches a shape of the rod body of the second support rod.

Optionally, the locking assembly includes a connecting member. The connecting member connects the locking block and the first locking frame. The connecting member is movable along the cross-sectional direction of the through hole relative to the first locking frame, and can lock at at least one location along the cross-sectional direction of the through hole. The connecting member is configured to cause the locking block to move along the cross-sectional direction of the through hole and to lock tightly.

Optionally, the connecting member includes a screw and a protrusion portion. The locking block and the first locking frame both include a through hole to match the screw. One of the through hole of the locking block and the through hole of the first locking frame is a threaded hole, the other one is a smooth hole. The screw penetrates the through holes of the locking block and the first locking frame, and is connected with the threaded hole through a threaded connection. The protrusion portion is abuttingly connected with the smooth hole of the locking block or the first locking frame.

Optionally, the support frame also includes a second locking frame. The second locking frame includes at least one through hole. One of the first support rod and the second support rod is fixedly connected with the second locking frame, the other one is slidably connected with the second locking frame via the through hole.

Optionally, there are four support rods. The four support rods include two first support rods and two second support rods.

Optionally, the second support rod is disposed between two first support rods, or the first support rod is disposed between two second support rods.

In another aspect, the present disclosure provides a stand assembly, implemented in a UAV, and including a support base and the above-described support frame. At least one of the first support rod or the second support rod of the support frame is connected with the support base.

In a third aspect, the present disclosure also provides a UAV, including an aircraft body and a stand assembly. In the stand assembly, the support rod that is not connected with the support base is connected with the aircraft body.

The support frame of the UAV includes a locking assembly and at least two support rods. The locking assembly includes a first locking frame and a locking block. At least two support rods are disposed on the first locking frame. The first locking frame is slidable along and relative to at least one support rod. The at least two support rods include at least one first support rod and at least one second support rod. The locking block 12 is movable along a direction perpendicular to an axial direction of the second support rod and can press tightly on the second support rod, to lock the second support rod at a current location relative to an axial direction of the first support rod. A length of such a support frame can change with the relative movement of the support rod, thereby adapting to different supporting and fixing scenes.

### BRIEF DESCRIPTION OF THE DRAWINGS

To more clearly describe the technical solutions of the various embodiments of the present disclosure or the existing technology, the accompanying drawings that are referred to in describing the embodiments or the existing technology will be briefly introduced. Obviously, the accompanying drawings described below are some embodiments of the present disclosure. A person of ordinary skill in the art could derive other drawings based on the accompanying drawings without inventive efforts.
FIG. 1 is a schematic illustration of a structure of a support frame in a completely extended state, according to a first embodiment of the present disclosure;
FIG. 2 is a schematic illustration of a structure of a support frame in a completely retracted state, according to the first embodiment of the present disclosure;
FIG. 3 a schematic illustration of a structure of a support frame in a free adjustment state, according to the first embodiment of the present disclosure;
FIG. 4 is an exploded view of a support frame, according to the first embodiment of the present disclosure;
FIG. 5 is a schematic illustration of relative locations of a locking assembly and a support rod in the support frame, according to the first embodiment of the present disclosure;
FIG. 6 is a schematic illustration of a locking assembly of the support frame, according to the first embodiment of the present disclosure;
FIG. 7 is an exploded view of the locking assembly shown in FIG. 6;
FIG. 8 is a schematic illustration of an adjustment stroke of the support frame in a completely retracted state, according to the first embodiment of the present disclosure;
FIG. 9 is a schematic illustration of an adjustment stroke of the support frame in a completely extended state, according to the first embodiment of the present disclosure;
FIG. 10 is a schematic illustration of a structure of an end portion of a second support rod of the support frame, according to the first embodiment of the present disclosure;
FIG. 11 is a schematic illustration of an adjustment stroke the of the support frame in a completely extended state, according to a second embodiment of the present disclosure;
FIG. 12 is a schematic illustration of a connecting structure of another support frame, according to a third embodiment of the present disclosure;
FIG. 13 is a schematic illustration of a structure of a stand assembly, according to a fourth embodiment of the present disclosure;
FIG. 14 is a schematic illustration of a structure of the UAV when a stand assembly is in a completely extended state, according to a fifth embodiment of the present disclosure;
FIG. 15 is a schematic illustration of a structure of the UAV when the stand assembly is in a completed retracted state, according to the fifth embodiment of the present disclosure.

Descriptions of Labels of Accompany Drawings:
1 - locking assembly;
2 - support rod;
11 - first locking frame;
12 - locking block;
13 - connecting member;
14 - nylon sleeve tube;
15 - second locking frame;
21, 21a, 21b - first locking rod;
22, 22a, 22b - second locking rod;
23 - stopping member;
111 - through hole of first locking frame;
112 - arc shaped splint;
113 - thread adjusting member;
114 - through groove;
131 - screw;
132 - protrusion portion;
151 - through hole of second locking frame;
100 - support frame;
101 - fixed base;
200 - stand assembly;
201 - aircraft body;
300 - UAV;
1121 - adjustment through hole;
12a - arc shaped surface.

### DETAILED DESCRIPTION OF THE EMBODIMENTS

In order to make the objective of the embodiments of the present disclosure, the technical solutions, and the advantages clearer, the technical solution of the embodiments of the present disclosure will be described clearly and completely with reference to the accompanying drawings. Obviously, the described embodiments are only some embodiments of the present disclosure, but are not all or the embodiments. The scope of protection of the present disclosure is defined by the appended claims.

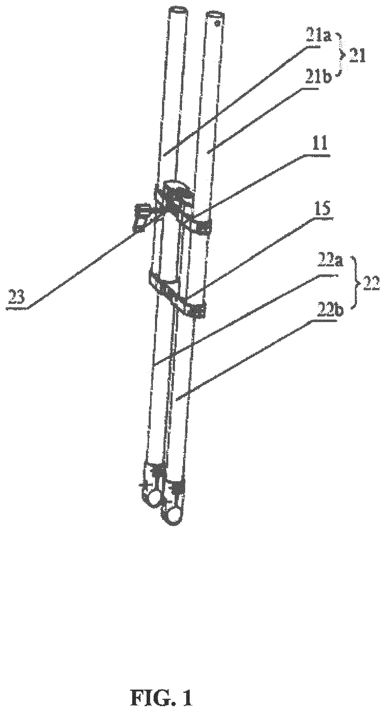

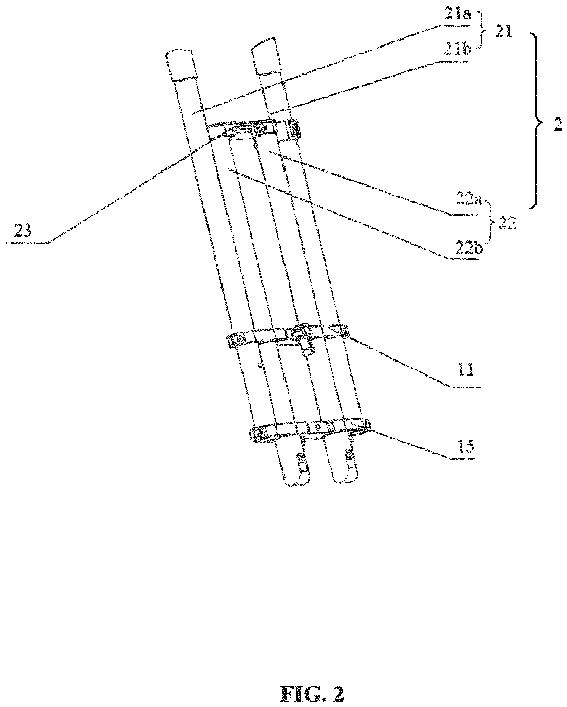

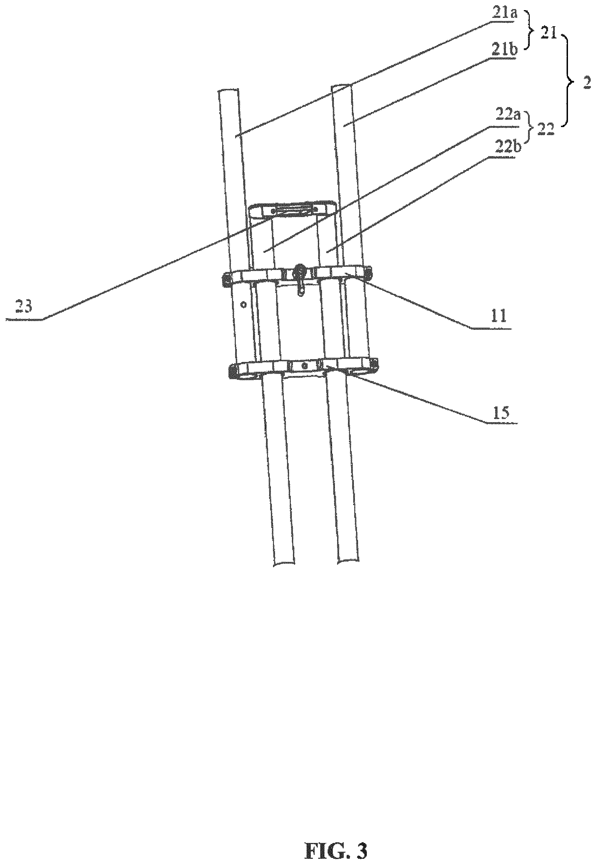

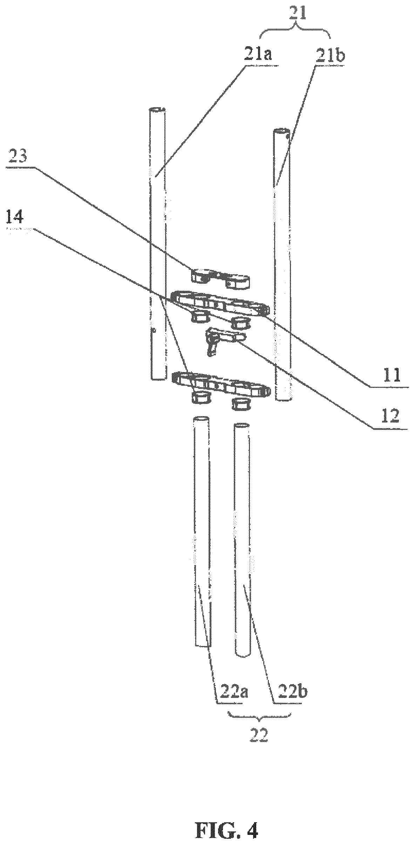

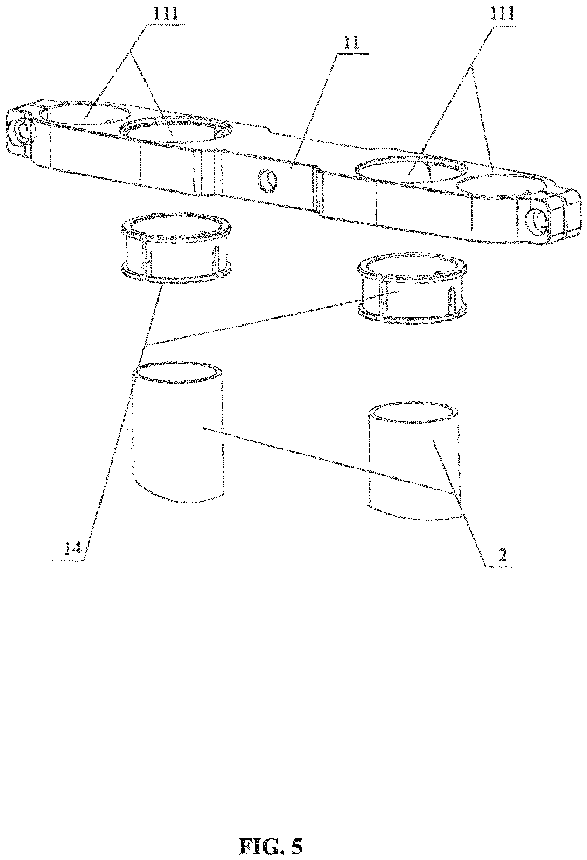

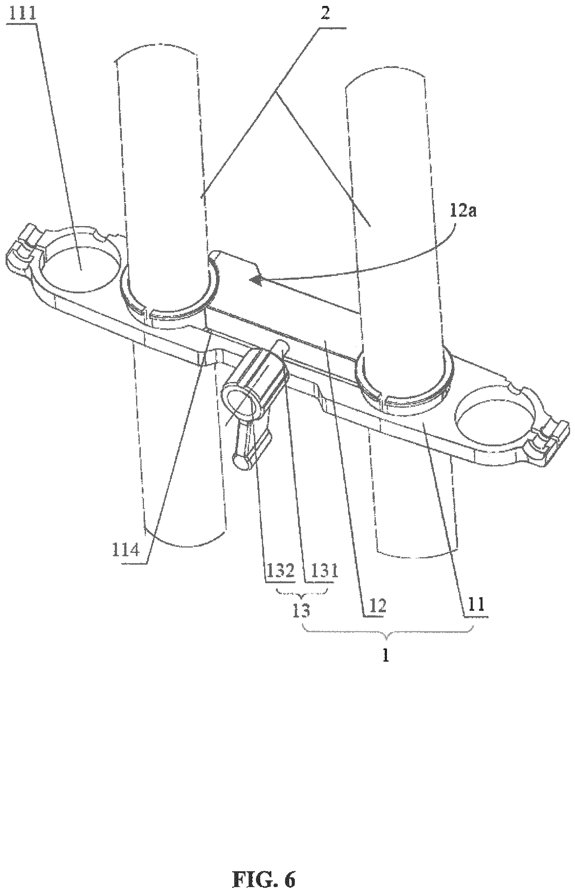

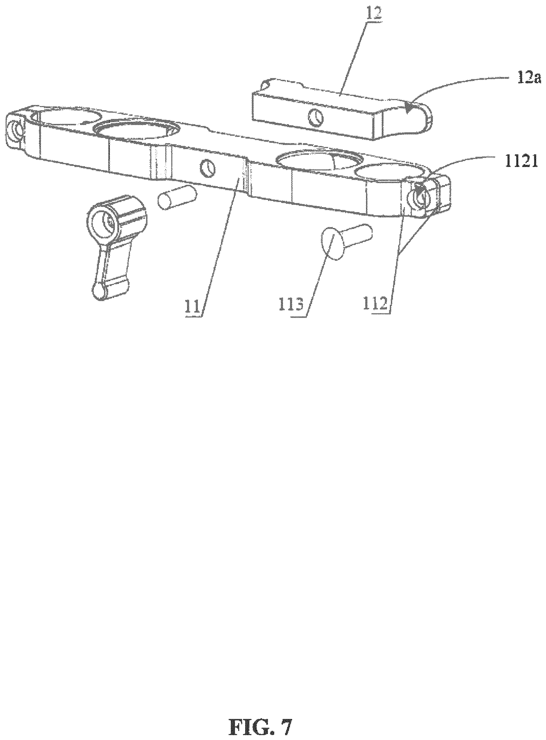

FIG. 1 is a schematic illustration of a structure of a support frame in a completely extended state, according to a first embodiment of the present disclosure. FIG. 2 is a schematic illustration of a structure of the support frame in a completed retracted state according to the first embodiment of the present disclosure. FIG. 3 is a schematic illustration of a structure of the support frame in a free adjustment state according to the first embodiment of the present disclosure. FIG. 4 is a schematic exploded view of the support frame according to the first embodiment of the present disclosure. FIG. 5 is a schematic illustration of relative locations of a locking assembly and a support rod of the support frame, according to the first embodiment of the present disclosure. FIG. 6 is a schematic illustration of a structure of the locking assembly of the support frame according to the first embodiment of the present disclosure. FIG. 7 is a schematic exploded view of the locking assembly shown in FIG. 6. As shown in FIG. 1 to FIG. 7, the support frame of this embodiment includes a locking assembly 1 and at least two support rods 2. The locking assembly 1 includes a first locking frame 11 and a locking block 12. At least two support rods 2 are disposed on the first locking frame 11. The first locking frame 11 is slidable along and relative to at least one support rod 2. The at least two support rods include at least one first support rod 21 and at least one second support rod 22. The locking block 12 is configured to be movable along a direction perpendicular to an axial direction of the second support rod 22 and to press tightly on the second support rod 22, to lock the support rod 22 at a current location relative to an axial direction of the first support rod 21.

Specifically, the support frame provided by the present disclosure, in general, can be implemented on a UAV, to realize a connection between an aircraft frame of the UAV and a landing stand, or other scenes where support and fixing is needed. The support rod 2 in the support frame is in general made of a material whose structure is relatively light and structural strength is relatively high, such as carbon fiber, which can be used to connect with different structures respectively. For example, using the support frame being implemented as a connection between the aircraft frame and the landing stand of the UAV as an example, the first support rod 21 of the at least two support rods may be connected with the aircraft frame of the UAV, whereas the second support rod 22 may be connected with the landing stand of the UAV. Because the first locking frame 11 can slide relative to and along at least one support rod, between the first support rod 21 and the second support rod 22, there are relatively movable axial locations due to a change in the relative locations between the first support rod 21 and the second support rod 22 and the first locking frame 11. As such, through location adjustment of different support rods along the axial direction, the change in the overall length of the support frame can be realized. To provide the maximum adjustable length of the support frame, the support rods in general maintain parallel to one another.

Here, the connection between the first locking frame 11 and the second support rod 22 is typically a slidable connection, whereas the connection between the first locking frame 11 and the first support rod 21 can be either a slidable connection, or a fixed connection in which the relative locations are fixed.

To realize the relative sliding between the first locking frame 11 and the support rod 2, the first locking frame 11 is typically provided with at least one through hole 111, and the support rod that can relatively slide penetrates these through holes 111, and the rod body of the support rod can slide relative to inner walls of these through holes 111. Because the facing directions of the through holes 111 are generally the same, the slidable support rods are also in parallel locations, i.e., the axial directions of the support rods are disposed in parallel.

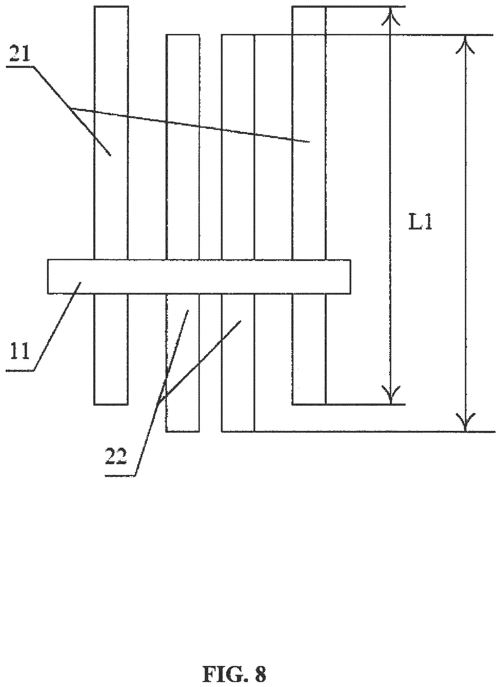

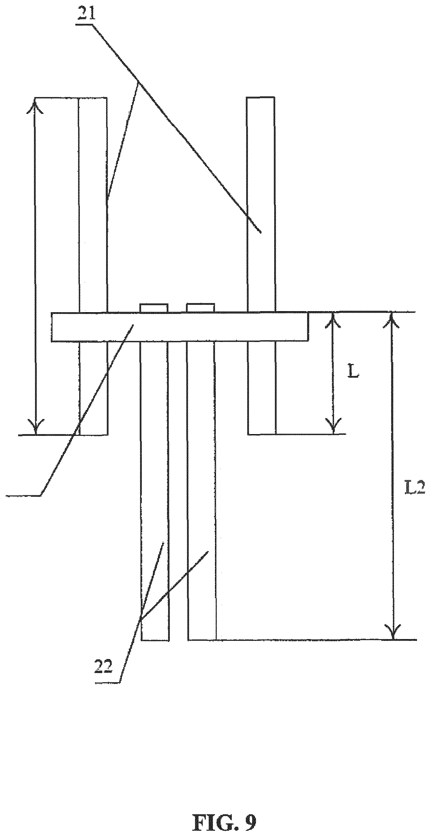

Here, the first locking frame 11 may be slidable relative to all support rods 2. Or the first locking frame 11 is fixed relative to the first support rod 21, and the second support rod 22 is slidable inside and relative to the first locking frame 11, thereby changing its axial location relative to the first locking frame 11. In this embodiment, the first locking frame 11 being relatively fixed relative to the first support rod 21, and being slidable relative to the second support rod 22 is used as an example for descriptive purposes. Here, if the overall length of the support frame is to be adjusted, only the location of the second support rod 22 relative to the first locking frame 11 needs to be adjusted. Here, FIG. 8 is a schematic illustration of an adjustment stroke of the support frame in a completely retracted state provided by the first embodiment of the present disclosure. FIG. 9 is a schematic illustration of an adjustment stroke of the support frame in a completely extended state provided by the first embodiment of the present disclosure. As shown in FIG. 8 and FIG. 9, a length of the first support rod 21 of the support frame is L1, a length of the second support rod 22 is L2, a distance between the first locking frame 11 and an end of the first support rod 21 is L. The height of the support frame in the completely retracted state is a larger value of L1 and L2, and the height of the support frame in the completely extended state is approximately L1+L2-L.

Here, the first locking frame 11 may realize the fixed connection with the first support rod 21 through various fixed connection configurations. For example, the first locking frame 11 and the first support rod 21 may form an integral structure, or may be fixed together through a threaded connection or a snap-fit connection. As a preferred embodiment, for the convenience of detaching, the first locking frame 11 may realize the fixing to the first support rod 21 via a through hole having a variable diameter. Here, the first locking frame 11 may include two arc shaped splints 112 that are symmetrically disposed and a thread adjusting member 113. A wall of the through hole corresponding to the first support rod 21 is formed by the two arc shaped splints 112 combined together. The two arc shaped splints 112 both have adjustment through holes 1121 matching with the thread adjusting member 113. The thread adjusting member 113 may penetrate the adjustment through hole 1121, and is configured to adjust the distance between the two arc shaped splints 112. When the distance between the two arc shaped splints 112 changes, the first locking frame 11 can securely fix to the first support rod 21.

To realize the slidable connection between the first locking frame 11 and the second support rod 22, the first locking frame 11 may include at least one through hole 111. The second support rod 22 may correspond to the through hole 111 one on one, and may penetrate the through hole 111. As such, the slidable connection between the second support rod 22 and the first locking frame 11 can be maintained. Because the support frame needs to bear a force, while maintaining the relative sliding between the second support rod 22 and the first locking frame 11, the second support rod 22 also needs to be fixable at any location of the first locking frame 11 in the axial direction, such that the entire support frame becomes a rigid structure that can bear a force. To realize the relative positioning between the second support rod 22 and the first locking frame 11 in the axial direction, the first locking frame 11 is provided with a locking block 12. The locking block 12 is movable in a cross-sectional direction of the through hole 111 that corresponds to the second support rod 22, and the locking block 12 can tightly press on the second support rod 22. Through the frictional force between the locking block 12 and the second support rod 22, the second support rod 22 may be locked at a current location relative to the first locking frame 11, i.e., the current location of the second support rod 22 relative to an axial direction of the first support rod 21. It should be noted that because the locking block 12 needs to press tightly on the second support rod 22 and rely on the frictional force to prevent the relative sliding between the second support rod 22 and the first locking frame 11, in general the locking block 12 and the second support rod 22 do not directly contact each other, but rather are connected through other structure or material having a relatively low hardness, in order to prevent the locking block 12 from scratching the rod body of the second support rod 22.

To set the locking block 12, a through groove 114 is provided on a wall of the through hole of the first locking frame 11 that corresponds to the second support rod 22. A dimension of an opening of the through groove 114 is slightly larger than the locking block 12, thereby allowing the locking block 12 to insert into the through groove 114, and to translate substantially in the opening direction of the through groove 114. As such, by controlling the facing direction and dimension of the through groove 114, the locking block 12 may be movable in the cross-sectional direction of the through hole 111 relative to the first locking frame 11, so as to abut on the second support rod 22 or to disengage from the rod body of the second support rod 22. In addition, the locking block 12 can lock tightly at at least one location in the cross-sectional direction of the through hole 111. As such, when the locking block 12 presses tightly on the second support rod 22, the locking block 12 and the wall of the through hole 111 opposite the through groove 114 together sandwich the second support rod 22 in between, and tightly lock to fix at this location, so as to tightly press the second support rod 22 at the current location in the axial direction.

In addition, the support frame also includes a nylon sleeve tube 14 having a variable diameter. The nylon sleeve tube 14 is disposed in the through hole 111 of the second support rod 22, and the locking block 12 tightly presses the outer side of the nylon sleeve tube 14, so as to tightly press the second support rod 22 at the current location in the axial direction. Because the material of the nylon sleeve tube 14 is relatively soft, and has a relatively strong wear resistance, can therefore sleeve-fit outside of the second support rod 22 having different rod diameters, and realize a buffer between the second support rod 22 and the through hole 111, thereby preventing the locking block 12 or the wall of the through hole of the first locking frame 11 from scratching the external surface or the painted surface of the rod body of the second support rod 22. In general, the length of the nylon sleeve tube 14 generally matches with the depth of the through hole 111, thereby preventing the nylon sleeve tube 14 from being exposed out of the through hole 111 of the first locking frame 11 to affect the aesthetics. In addition, the opening of the nylon sleeve tube 14 is generally provided with a positioning structure such as a protruding ring to prevent the nylon sleeve tube 14 from sliding out of the through hole 111.

To increase the grasping force of the locking block 12 and the wall of the through hole 111 applied to the second support rod 22, and prevent the second support rod 22 from sliding due to an insufficient pressing force of the locking block 12, the locking block 12 includes an arc shaped surface 12a that matches with the shape of the rod body of the second support rod 22. As such, the arc shaped surface 12a of the locking block 12 can closely fit with the second support rod 22, thereby increasing the contact area between the locking block 12 and the second support rod 22, in order to increase the frictional force of the locking block 12 relative to the second support rod 22, and prevent the second support rod 22 from sliding due to an overly large axial force. In the meantime, the arc shaped surface 12a can assist in limiting the position of the second support rod 22, relatively less the movement of the second support rod 22 in the direction perpendicular to the axial direction. It should be noted that the radian of the arc shaped surface 12a in general can be larger than the radian of the rod body of the second support rod 22, to ensure that the arc shaped surface 12a at least partially closely fits with the second support rod 22. In the meantime, supporting rods having different rod diameters are allowed to be used interchangeably.

Here, in order to realize the locking block 12 tightly locking at one or multiple locations in a direction perpendicular to the axial direction of the second support rod 22, i.e., the cross-sectional direction of the through hole 111 of the first locking frame 11, as a preferred tight locking configuration, the locking assembly 2 also includes a connecting member 13. The connecting member 13 connects between the locking block 12 and the first locking frame 11. The connecting member 13 is movable in the cross-sectional direction of the through hole 111 relative to the first locking frame 11, and can lock at at least one location in the cross-sectional direction of the through hole 111. The connecting member 13 is configured to cause the locking block 12 to move in the cross-sectional direction of the through hole 111 and lock tightly.

Specifically, the connecting member 13 may be multiple types of different connecting members and tight locking structures, as long as can tightly lock at one or multiple locations in the cross-sectional direction of the through hole of the first locking frame 11. For example, tight locking can be realized through a cam tight locking mechanism. Because the cam tight locking mechanism can realize tight locking of a specific location, the locking block 12 may tightly lock at a relative location of the first locking frame 11, for example, a location the locking block 12 tightly presses on the second support rod 22; or, the tight locking of the locking block can be realized through a thread tight locking mechanism, in which, threads may be rotated to drive the locking block 12 to move forward or retract backward, to cause the location of the locking block 12 relative to the second support rod 22 in the cross-sectional direction of the through hole 111 to change. Because the thread tight locking mechanism has a self-locking capability, the locking block 12 can lock at any location in the cross-sectional direction of the through hole 111. As such, tight locking can be realized for multiple types of second support rods 22 having different rod diameters.

Using the connecting member 13 being a thread tight locking mechanism as an example for descriptive purpose: here, the connecting member 13 can include a screw 131 and a protrusion portion 132. The locking block 12 and the first locking frame 11 both have a through hole matching with the screw 131. One of the through hole of the locking block 12 and the through hole of the first locking frame 11 is a threaded hole, the other one is a smooth hole without threads. The screw penetrates the through holes of the locking block 12 and the first locking frame 11, and is connected with the threads of the threaded hole. The protrusion portion 132 abuts against the smooth hole of the through hole of the locking block 12 or the first locking frame 11. As such, a user can, by handholding the protrusion portion 132 to rotate the screw 131, cause the locking block 12 to move forward or retract backward in an axial direction of the screw 131 under the rotational movement of the threads. When the locking block 12 contacts the second support rod 22 and presses tightly on the second support rod 22, the protrusion portion 132 can be released. At this moment, the location of the locking block 12 relative to the first locking frame 11 can be locked through the thread connection between the screw 131 and the threaded hole.

Here, the location of the threaded hole can be set based on the location of the protrusion portion 132 and the locking block 12 relative to the first locking frame 11. For example, when the protrusion portion 132 and the locking block 12 are located at different sides of the first locking frame 11, the through hole of the locking block 12 can be a threaded hole, and the through hole on the first locking frame 11 can be a smooth hole. Then, the protrusion portion 132 can abut against the first locking frame 11, to fix the relative locations between the screw 131 and the first locking frame 11, and to cause the locking block 12 to move back and forth in the axial direction of the screw 131 through the thread connection between the locking block 12 and the screw 131; or when the locking block 12 and the protrusion portion 132 are located at the same side of the first locking frame 11, the through hole of the locking block 12 can be a smooth hole, and the through hole on the first locking frame 11 can be a threaded hole. As such, the protrusion portion 132 can abut against the locking block 12, and can move back and forth relative to the first locking frame 11 through the thread connection between the screw 131 and the first locking frame 11, to cause the locking block 12 to move synchronously.

Optionally, the protrusion portion 132 of the connecting member 13 in general can be a structure that is convenient for a user to handhold and operate, such as a hand wheel, or a joystick, etc., in order to increase the convenience and the ease of use of adjusting the length of the support frame.

In addition, as an optional configuration, because the support of the first locking frame 11 for the support rod 2 in the axial direction of the support rod 2 is approximately a single point support, if the depth of the through hole on the first locking frame 11 for penetrating the support rod 2 is shallow, shaking or swing of the support rod 2 may occur in the through hole in the axial direction of the through hole. To avoid this phenomenon, it is needed to provide assisted guiding to the support rod 2. To realize the assisted guiding for the support rod 2, the support frame also includes a second locking frame 15. The second locking frame 15 is provided with at least one through hole 151. One of the first support rod 21 and the second support rod 22 is fixedly connected with the second locking frame 15. Another one of the first support rod 21 and the second support rod 22 is slidably connected with the second locking frame 15 through the through hole 151. Specifically, referring to FIG. 1 to FIG. 4, as an optional structure, the first support rod 21 and the second locking frame 15 are fixedly connected, and the second support rod 22 is relatively slidably connected with the second locking frame 15 through the through hole 151. Here, the fixed connection method between the first support rod 21 and the second locking frame 15 can be a fixed connection between an end portion of the first support rod 21 and the corresponding through hole. As such the second locking frame 15 and the first locking frame 11 can be respectively disposed at different locations in the axial direction of the support rod 2, and can support and limit the position of the relatively slidable support rod through structures such as the through hole. Because the support rod 2 is guided and position-limited by the through hole at different locations in the axial direction of itself, the location of the support rod 2 relative to the axial direction of the through hole can be fixed, resulting in a relatively strong structural stability and reliability of the support frame.

Here, the fixed connection configuration between the second locking frame 15 and the first support rod 21 can likewise have multiple fixed connection configurations. For example, arc shaped splints and a thread adjusting member can be combined to form a through hole having an adjustable diameter, and the first support rod 21 can penetrate the through hole, thereby realizing a detachable connection. The detailed fixed connection configuration is similar to the fixed connection configuration between the first locking frame 11 and the second support rod 21, which is not repeated.

When the support frame provides support and fixing, a single support rod may rotate relative to the first locking frame 11, or may be damaged due to insufficient structural strength of itself. These will all affect the support stability of the support frame. To ensure structural stability, the quantity of the first support rod 21 and the second support rod 22 in the support rod 2 may both be more than one. For example, optionally, there may be four support rods 2, the four support rods 2 includes two first support rods 21a, 21b and two second support rods 22a, 22b. As such when the diameters of the first support rods 21a, 21b and the second support rods 22a, 22b are fixed, because the quantity of the support rods is increased, the overall structural strength of the support frame can be increased, enhancing the load bearing capacity of the support frame; in the meantime, two different first support rods 21a, 21b or two second support rods 22a, 22b operate in concert, which can also prevent rotation from occurring when a single support rod is fixed, thereby increasing the overall reliability of the support frame. Here, to fix the support rods, the first locking frame 11 is provided with four parallel through holes 111, to allow four different support rods 2 to penetrate therethrough.

Further, in order to realize the tight pressing and locking of the locking block 12 to the second support rod 22 when the support frame includes multiple support rods, two second support rods 22a and 22b are disposed between two first support rods 21a, 21b. Here, two through holes adjacent an inner side of the first locking frame 11 may be configured to allow the second support rods 22a and 22b to penetrate therethrough, whereas two through holes located at an outer side may be configured to allow the first support rods 21a and 21b to penetrate therethrough. The through groove 114 on the first locking frame 11 may transverse the two through holes that allow the second support rods 22a and 22b to penetrate therethrough. The locking block 12 includes two grasping members or grasping surfaces having two different facing directions and are respectively configured to tightly grasp different second support rods. In general, the through groove 114 and the locking block 12 are both symmetrical structures, which ensure tight grasping of two second support rods 22a and 22b simultaneously.

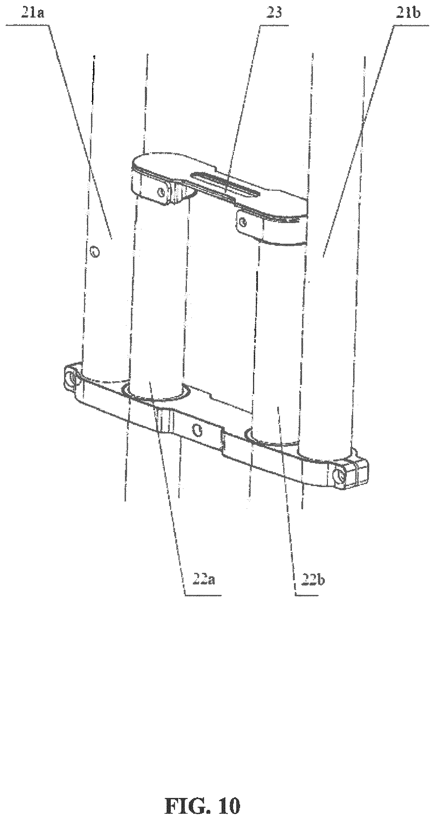

In order to limit the position of the second support rods 22a and 22b, preventing the second support rods 22a and 22b from separating from the through hole 111 of the first locking frame 11, the position of the second support rod may be limited through a stopping structure such as a stopping member. FIG. 10 is a schematic illustration of a structure of an end portion of the second support rod of the support frame, according to the first embodiment of the present disclosure. As shown in FIG. 1 to FIG. 10, specifically, a stopping member 23 is provided between end portions of the two second support rods 22a and 22b to abut against the first locking frame 11. As a realization configuration having a simple structure, the stopping member 23 may include two tube covers respectively sleeve-fit onto the end portions of the different second support rods 22a or 22b, and a connecting rib connecting the two tube covers. The stopping member 23 may be a metal stopping member to increase the structural strength and the stopping reliability.

In addition, when the quantity of the support rods 2 is greater than four, the arrangement of the multiple support rods is similar to the situation when there are four support rods, which is not repeated.

Optionally, the quantity of the first support rods 21 and the second support rods 22 in the multiple support rods may be the same or different, and the quantity of the first support rods 21 and the quantity of the second support rods 22 may both be an odd number or an even number, to adapt to different application scenes and needs.

In this embodiment, the support frame includes a locking assembly and at least two support rods. The locking assembly includes a first locking frame and a locking block. The at least two support rods are disposed on the first locking frame. The first locking frame can slide relative to and along at least one support rod. The at least two support rods includes at least one first support rod and at least one second support rod. The locking block is configured to be movable in a direction perpendicular to the axial direction of the second support rod and to press tightly on the second support rod, in order to lock the second support rod at the current location of relative to the axial direction of the first support rod. As such, the length of the support frame can change with the relative movement of the support rod, thereby adapting to different supporting and fixing scenes.

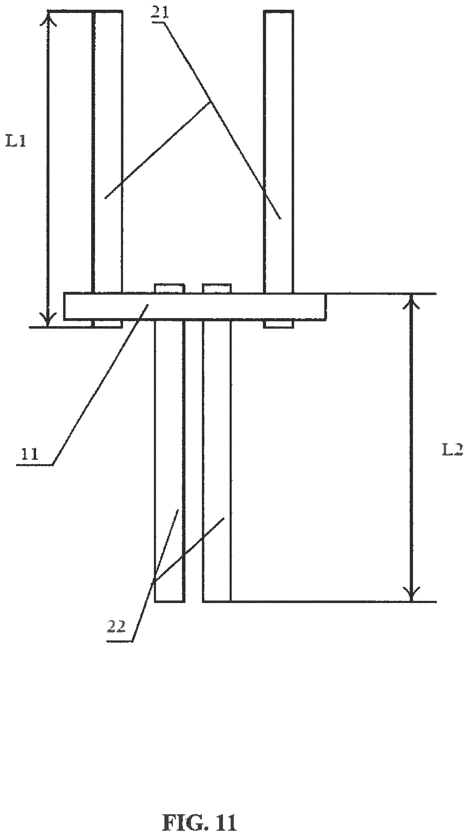

In addition, the first support rod of the support frame can also be slidably connected with the first locking frame. FIG. 11 is a schematic illustration of an adjustment stroke of the support frame in a completely extended state according to a second embodiment of the present disclosure. As shown in FIG. 11, because the first support rod and the first locking frame can be slidably connected, the adjustable stroke of the support frame is larger compared to the first embodiment. For example, the length of the first support rod is L1, the length of the second support rod is L2, then the maximum height of the support frame can be L1 + L2, and the minimum height of the support frame can still be consistent with the minimum height of the first embodiment, as shown in FIG. 8. Therefore, the connection that allows for relative sliding between the first support rod and the first locking frame can increase the adjustable stroke of the support frame, adapting to different application scenes.

Specifically, in order to realize the relative sliding between the first support rod and the first locking frame, the first locking frame 11 may be provided with at least two through holes having the same facing directions. The first support rod 21 and thee second support rod 22 both correspond to the through holes 111 one on one and penetrate the through holes, and can realize relative sliding relative to the through holes, thereby realizing the relative sliding and adjustment relative to the first locking frame.

In this embodiment, the first support rod and the second support rod of the support frame can both maintain relative sliding with the first locking frame, therefore can provide a larger adjustment stroke for the support frame, thereby adapting to more application scenes.

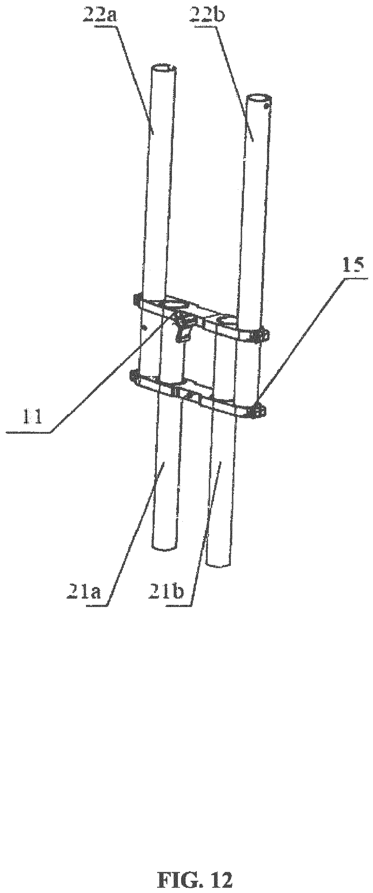

In addition, when there are multiple support rods in the support frame, two first support rods may be disposed between two second support rods. FIG. 12 is a schematic illustration of a connection structure of another support frame according to a third embodiment of the present disclosure. As shown in FIG. 12, for the support frame provided by this embodiment, its overall structure and operation principles are all similar to the support frame of the above-described first embodiment. The differences are, in the four support rods 2 of this embodiment, two first support rods 21a and 21b are located between two second support rods 22a and 22b, and the connection relationship between the second locking frame 15 that is configured to provide guide for and limit the position of the support rods and the support rods is different from that of the above-described first embodiment. Specifically, two through holes on the first locking frame 11 adjacent an inner side are configured to allow the first support rods 21a and 21b to penetrate therethrough, and are fixedly connected with end portions of the first support rods 21a and 21b. Two through holes located at an outer side are configured to allow the second support rods 22a and 22b to penetrate therethrough.

Here, the support rod is connected with the second locking frame 15. As another optional structure of the second locking frame, the first support rods 21a, 21b and the second locking frame 15 are slidably connected through penetrating two through holes located at an inner side of the second locking frame 15. The second support rods 22a, 22b and the second locking frame 15 are fixedly connected. Specifically, two through holes located at an outer side of the second locking frame 15 are fixed to end portions of the second support rods 22a and 22b. As such, the second locking frame 15 and the first locking frame 11 can perform position limiting together, thereby preventing the support rod from separating from through holes of the first locking frame 11 or the second locking frame 12, without the need of providing a stopping member to stop and limit the position of the support rod.

In this embodiment, the support frame includes a locking assembly and at least two support rods. The locking assembly includes a first locking frame and a locking block. At least two support rods are disposed on the first locking frame. The first locking frame can slide relative to and along at least one support rod. The at least two support rods include at least one first support rod and at least one second support rod. The locking block is configured to be movable in a direction perpendicular to the axial direction of the second support rod and to press rightly on the second support rod, so as to lock the second support rod at a current location relative to the axial direction of the first support rod; in addition, the second locking frame is fixedly connected with the second support rod, and is relatively slidably connected with the first support rod. As such, the length of the support frame can change with the relative movement of the support rod, thereby adapting to different support fixing scenes.

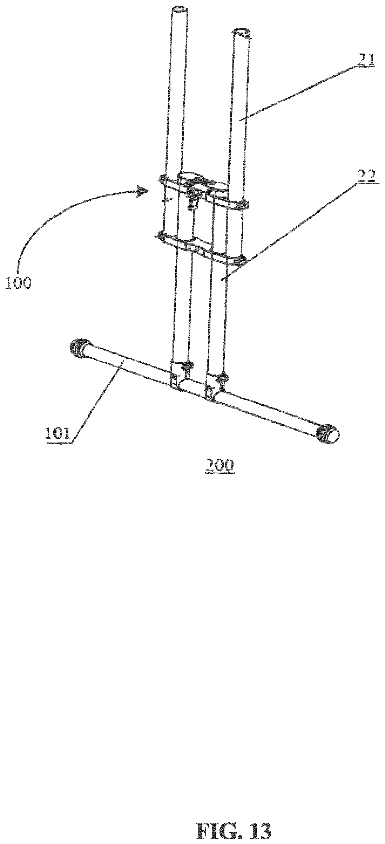

FIG. 13 is a schematic illustration of a structure of a stand assembly according to a fourth embodiment of the present disclosure. As shown in FIG. 13, the present disclosure provides a stand assembly 200 implemented in a UAV, including a support base 101 and a support frame 100 as described in the first embodiment. At least one of the first support rod 21 or the second support rod 22 of the support frame 100 is connected with the support base 101.

Specifically, the support base 101 of the stand assembly 200 in general includes a sturdy support structure, and can be placed on the ground or other supporting plane. The support rod from the first support rod 21 or the second support rod 22 of the support frame 100 that is not connected with the support base 101 may be connected with a structure on the UAV, in order to support the UAV. Here, the relative locations of the first support rod 21 and the second support rod 22 of the support frame 100 in the axial direction can change, to adjust the overall length of the support frame 100, thereby adapting to different application requirements.

In this embodiment, the stand assembly includes a support base and a support frame. At least one of the first support rod or the second support rod of the support frame is connected with the support base; the support frame includes the locking assembly and at least two support rods. The locking assembly includes a first locking frame and a locking block. The at least two support rods are disposed on the first locking frame. The first locking frame is slidable relative to and along at least one support rod. The at least two support rods include at least one first support rod and at least one second support rod. The locking block is configured to be movable in a direction perpendicular to the axial direction of the second support rod and to press tightly on the second support rod, so as to lock the second support rod at the current location relative to the axial direction of the first support rod. As such, the overall length or height of the stand assembly can change with the relative movement of the support rod, thereby adapting to different supporting and fixing scenes.

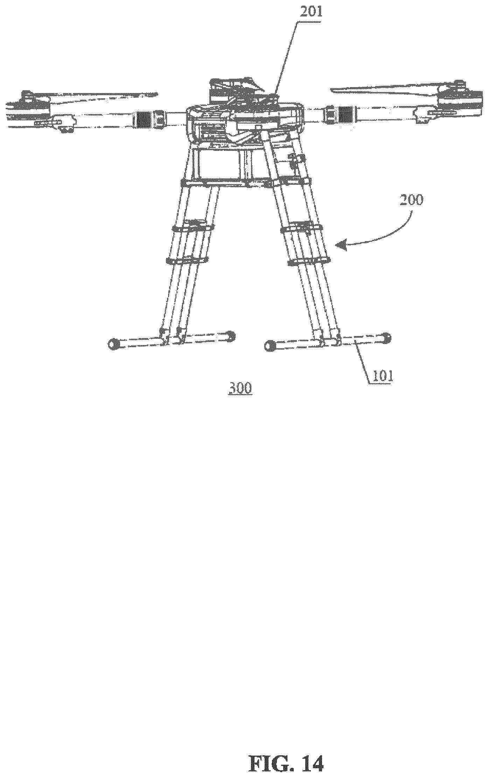

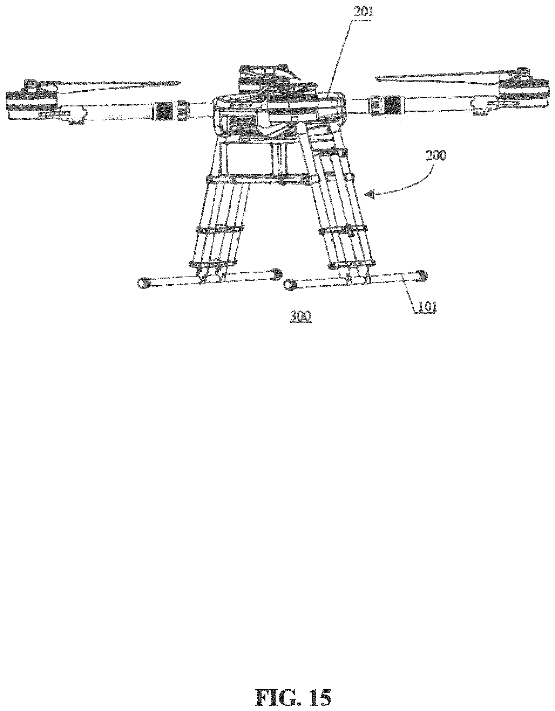

FIG. 14 is a schematic illustration of a structure of the UAV when the stand assembly is in a completely extended state according to a fifth embodiment of the present disclosure. FIG. 15 is a schematic illustration of a structure of the UAV when the stand assembly is in a completed retracted state, according to the fifth embodiment of the present disclosure. As shown in FIG. 14 and FIG. 15, the UAV 300 provided by this embodiment includes an aircraft body 201 and a stand assembly 200 as described in the second embodiment. In the stand assembly 200, the support rod that is not connected with the support base 101 is connected with the aircraft body 201.

Here, one of the first support rod or the second support rod of the stand assembly 200 is connected with the support base 101, and the other is connected with the machine frame or the aircraft body 201 of the UAV, thereby realizing support for the UAV 300. Because the length of the support frame of the stand assembly 200 can be adjusted, the height of the aircraft body 201 from the ground when the UAV 300 rests on the ground can be changed, thereby adapting to the mounting and use of loads of different dimensions on the aircraft body 201, preventing the loads from scratching with the ground due to the height of the stand assembly 200 being excessively low.

In this embodiment, the UAV includes the aircraft body and the stand assembly. The support rod in the stand assembly that is not connected with the support base is connected with the aircraft body; the support frame of the stand assembly includes a locking assembly and at least two support rods. The locking assembly includes a first locking frame and a locking block. At least two support rods are disposed on the first locking frame. The first locking frame is slidable along at least one support rod. The at least two support rods include at least one first support rod and at least one second support rod. The locking block is configured to be movable in the direction perpendicular to the axial direction of the second support rod and to press tightly on the second support rod, so as to lock the second support rod at the current location relative to the axial direction of the first support rod. As such, the height of the UAV from the ground, i.e., the height of the stand, can change with the relative movement of the support rod, thereby adapting to different loads and aircraft body dimensions.

## Claims

1. A support frame (100) for an unmanned aerial vehicle, UAV, the support frame (100) comprising a locking assembly (1) and at least two support rods (2), the locking assembly (1) including a first locking frame (11) and a locking block (12), wherein the at least two support rods (2) are disposed on the first locking frame (11), the first locking frame (11) is slidable relative to and along at least one of the support rods (2), the at least two support rods (2) include at least one first support rod (21) and at least one second support rod (22), the locking block (12) is configured to move in a direction perpendicular to an axial direction of the second support rod (22) and to press tightly on the second support rod (22), to lock the second support rod (22) at a current location relative to an axial direction of the first support rod (21),
wherein the first locking frame (11) is provided with at least one through hole, the second support rod (22) corresponds to the through hole one on one and penetrates the through hole, a wall of the through hole includes a through groove (114), the locking block (12) is located in the through groove (114), the locking block (12) is movable in a cross-sectional direction of the through hole relative to the first locking frame (11) and can lock at at least one location in the cross-sectional direction of the through hole, the locking block (12) is configured to tightly press, together with the wall of the through hole opposite the through groove (114), the second support rod (22) at the current location in the axial direction.

2. The support frame (100) according to claim 1, also including a nylon sleeve tube (14) having a variable diameter, wherein the nylon sleeve tube (14) is disposed in the through hole where the second support rod (22) is located, and the locking block (12) tightly presses an outer side of the nylon sleeve tube (14), to tightly press the second support rod (22) at the current location in the axial direction.

3. The support frame (100) according to claim 1, wherein the locking block (12) includes an arc shaped surface (12a) matching with a shape of a rod body of the second support rod (22).

4. The support frame (100) according to any of claims 1-3, wherein the locking assembly (1) includes a connecting member (13), the connecting member (13) connects between the locking block (12) and the first locking frame (11), the connecting member (13) is movable in a cross-sectional direction of the through hole relative to the first locking frame (11) and can lock at at least one location in the cross-sectional direction of the through hole, the connecting member (13) is configured to cause the locking block (12) to move in the cross-sectional direction of the through hole and to tightly lock.

5. The support frame (100) according to claim 4, wherein the connecting member (13) includes a screw and a protrusion portion, the locking block (12) and the first locking frame (11) both include a through hole matching with the screw, and one of the through hole of the locking block (12) and the through hole of the first locking frame (11) is a threaded hole, the other one is a smooth hole, the screw penetrates the through holes of the locking block (12) and the first locking frame (11), to connect with threads of the threaded hole, the protrusion portion abuts against the smooth hole of the through holes of the locking block (12) or the first locking frame (11).

6. The support frame (100) according to any of claims 1-3, also including a second support frame, wherein the second support frame is provided with at least one through hole, one of the first support rod (21) and the second support rod (22) is fixedly connected with the second locking frame (15), the other one penetrates the through hole to slidably connect with the second locking frame (15).

7. The support frame (100) according to any of claims 1-3, wherein the support frame (100) includes four support rods (2), the four support rods (2) include two of the first support rods (21) and two of the second support rods (22).

8. The support frame (100) according to claim 7, wherein the second support rods (22) are disposed between the two of the first support rods (21), or the first support rods (21) are disposed between the two of the second support rods (22).

9. A stand assembly (200) for an unmanned aerial vehicle, UAV, the stand assembly (200) comprising a support base (101) and a support frame (100) according to one of the preceding claims,
wherein at least one of the first support rod (21) or the second support rod (22) of the support frame (100) is connected with the support base (101).

10. An unmanned aerial vehicle, UAV, comprising an aircraft body (201) and a stand assembly (200),
the stand assembly (200) comprising a support base (101) and a support frame (100),
the support frame (100) comprising a locking assembly (1) and at least two support rods (2), the locking assembly (1) including a first locking frame (11) and a locking block (12), wherein the at least two support rods (2) are disposed on the first locking frame (11), the first locking frame (11) is slidable relative to and along at least one of the support rods (2), the at least two support rods (2) include at least one first support rod (21) and at least one second support rod (22), the locking block (12) is configured to move in a direction perpendicular to an axial direction of the second support rod (22) and to press tightly on the second support rod (22), to lock the second support rod (22) at a current location relative to an axial direction of the first support rod (21),
wherein at least one of the first support rod (21) or the second support rod (22) of the support frame (100) is connected with the support base (101),
and wherein in the stand assembly (200), the support rod not connected with the support base (101) is connected with the aircraft body (201).

## Patentansprüche

1. Stützrahmen (100) für ein unbemanntes Luftfahrzeug, UAV, wobei der Stützrahmen (100) eine Verriegelungsanordnung (1) und mindestens zwei Stützstangen (2) umfasst, wobei die Verriegelungsanordnung (1) einen ersten Verriegelungsrahmen (11) und einen Verriegelungsblock (12) beinhaltet, wobei die mindestens zwei Stützstangen (2) am ersten Verriegelungsrahmen (11) angeordnet sind, der erste Verriegelungsrahmen (11) relativ zu und entlang mindestens einer der Stützstangen (2) gleitbar ist, wobei die mindestens zwei Stützstangen (2) mindestens eine erste Stützstange (21) und mindestens eine zweite Stützstange (22) beinhalten, wobei der Verriegelungsblock (12) dazu ausgelegt ist, sich in eine Richtung senkrecht zu einer Axialrichtung der zweiten Stützstange (22) zu bewegen und fest gegen die zweite Stützstange (22) zu drücken, um die zweite Stützstange (22) an einer aktuellen Stelle relativ zu einer Axialrichtung der ersten Stützstange (21) zu verriegeln,
wobei der erste Verriegelungsrahmen (11) mit mindestens einem Durchgangsloch versehen ist, die zweite Stützstange (22) dem Durchgangsloch eins zu eins entspricht und das Durchgangsloch durchdringt, eine Wand des Durchgangslochs eine Durchgangsnut (114) beinhaltet, der Verriegelungsblock (12) sich in der Durchgangsnut (114) befindet, der Verriegelungsblock (12) in eine Querschnittsrichtung des Durchgangslochs relativ zum ersten Stützrahmen (11) bewegbar ist und in der Querschnittsrichtung des Durchgangslochs an mindestens einer Stelle verriegelt werden kann, der Verriegelungsblock (12) dazu ausgelegt ist, zusammen mit der Wand des Durchgangslochs gegenüber der Durchgangsnut (114) an der aktuellen Stelle in die Axialrichtung fest gegen die zweite Stützstange (22) zu drücken.

2. Stützrahmen (100) nach Anspruch 1, der außerdem ein Nylonmantelrohr (14) mit einem variablen Durchmesser beinhaltet, wobei das Nylonmantelrohr (14) im Durchgangsloch angeordnet ist, wo sich die zweite Stützstange (22) befindet, und der Verriegelungsblock (12) fest gegen eine Außenseite des Nylonmantelrohrs (14) drückt, um an der aktuellen Stelle in die Axialrichtung fest gegen die zweite Stützstange (22) zu drücken.

3. Stützrahmen (100) nach Anspruch 1, wobei der Verriegelungsblock (12) eine bogenförmige Fläche (12a) beinhaltet, die mit einer Form eines Stangenkörpers der zweiten Stützstange (22) übereinstimmt.

4. Stützrahmen (100) nach einem der Ansprüche 1-3, wobei die Verriegelungsanordnung (1) ein Verbindungselement (13) beinhaltet, das Verbindungselement (13) zwischen dem Verriegelungsblock (12) und dem ersten Verriegelungsrahmen (11) verbunden ist, das Verbindungselement (13) in eine Querschnittsrichtung des Durchgangslochs relativ zum ersten Stützrahmen (11) bewegbar ist und an mindestens einer Stelle in der Querschnittsrichtung des Durchgangslochs verriegelt werden kann, das Verbindungselement (13) dazu ausgelegt ist, den Verriegelungsblock (12) zu veranlassen, sich in die Querschnittsrichtung des Durchgangslochs zu bewegen und fest zu verriegeln.

5. Stützrahmen (100) nach Anspruch 4, wobei das Verbindungselement (13) eine Schraube und einen Vorsprungsabschnitt beinhaltet, wobei der Verriegelungsblock (12) und der erste Verriegelungsrahmen (11) jeweils ein Durchgangsloch beinhalten, das mit der Schraube übereinstimmt, und eines des Durchgangslochs des Verriegelungsblocks (12) und des Durchgangslochs des ersten Verriegelungsrahmens (11) ein Gewindeloch ist, das andere ein glattes Loch ist, die Schraube die Durchgangslöcher des Verriegelungsblocks (12) und des ersten Verriegelungsrahmens (11) durchdringt, um sich mit dem Gewinde des Gewindelochs zu verbinden, der Vorsprungsabschnitt am glatten Loch des Durchgangslochs des Verriegelungsblocks (12) oder des ersten Verriegelungsrahmens (11) anliegt.

6. Stützrahmen (100) nach einem der Ansprüche 1-3, der außerdem einen zweiten Stützrahmen beinhaltet, wobei der zweite Stützrahmen mit mindestens einem Durchgangsloch versehen ist, eine der ersten Stützstange (21) und der zweiten Stützstange (22) fest mit dem zweiten Verriegelungsrahmen (15) verbunden ist, und die andere das Durchgangsloch durchdringt, um sich gleitbar mit dem zweiten Stützrahmen (15) zu verbinden.

7. Stützrahmen (100) nach einem der Ansprüche 1-3, wobei der Stützrahmen (100) vier Stützstangen (2) beinhaltet, die vier Stützstangen (2) zwei der ersten Stützstangen (21) und zwei der zweiten Stützstangen (22) beinhalten.

8. Stützrahmen (100) nach Anspruch 7, wobei die zweiten Stützstangen (22) zwischen den zwei der ersten Stützstangen (21) angeordnet sind oder die ersten Stützstangen (21) zwischen den zwei der zweiten Stützstangen (22) angeordnet sind.

9. Ständeranordnung (200) für ein unbemanntes Luftfahrzeug, UAV, wobei die Ständeranordnung (200) eine Stützbasis (101) und einen Stützrahmen (100) nach einem der vorhergehenden Ansprüche umfasst,
wobei mindestens eine der ersten Stützstange (21) oder der zweiten Stützstange (22) des Stützrahmens (100) mit der Stützbasis (101) verbunden ist.

10. Unbemanntes Luftfahrzeug, UAV, das einen Fluggerätekörper (201) und eine Ständeranordnung (200) umfasst,
wobei die Ständeranordnung (200) eine Stützbasis (101) und einen Stützrahmen (100) umfasst,
wobei der Stützrahmen (100) eine Verriegelungsanordnung (1) und mindestens zwei Stützstangen (2) umfasst, wobei die Verriegelungsanordnung (1) einen ersten Verriegelungsrahmen (11) und einen Verriegelungsblock (12) beinhaltet, wobei die mindestens zwei Stützstangen (2) am ersten Verriegelungsrahmen (11) angeordnet sind, der erste Verriegelungsrahmen (11) relativ zu und entlang mindestens einer der Stützstangen (2) gleitbar ist, die mindestens zwei Stützstangen (2) mindestens eine erste Stützstange (21) und mindestens eine zweite Stützstange (22) beinhalten, wobei der Verriegelungsblock (12) dazu ausgelegt ist, sich in eine Richtung senkrecht zu einer Axialrichtung der zweiten Stützstange (22) zu bewegen und fest gegen die zweite Stützstange (22) zu drücken, um die zweite Stützstange (22) an einer aktuellen Stelle relativ zu einer Axialrichtung der ersten Stützstange (21) zu verriegeln,
wobei mindestens eine der ersten Stützstange (21) oder der zweiten Stützstange (22) des Stützrahmens (100) mit der Stützbasis (101) verbunden ist,
und wobei die Stützstange, die nicht mit der Stützbasis (101) verbunden ist, in der Ständeranordnung (200) mit dem Fluggerätekörper (201) verbunden ist.

## Revendications

1. Cadre de support (100) pour un véhicule aérien sans pilote, UAV, le cadre de support (100) comprenant un ensemble de verrouillage (1) et au moins deux tiges de support (2), l'ensemble de verrouillage (1) comprenant un premier cadre de verrouillage (11) et un bloc de verrouillage (12), dans lequel les au moins deux tiges de support (2) sont disposées sur le premier cadre de verrouillage (11), le premier cadre de verrouillage (11) peut coulisser par rapport à et le long d'au moins l'une des tiges de support (2), les au moins deux tiges de support (2) comprennent au moins une première tige de support (21) et au moins une seconde tige de support (22), le bloc de verrouillage (12) est configuré pour se déplacer dans une direction perpendiculaire à une direction axiale de la seconde tige de support (22) et pour appuyer fermement sur la seconde tige de support (22) pour verrouiller la seconde tige de support (22) à un emplacement courant par rapport à une direction axiale de la première tige de support (21),
dans lequel le premier cadre de verrouillage (11) est prévu avec au moins un trou débouchant, la seconde tige de support (22) correspond au trou débouchant, un contre un, et pénètre dans le trou débouchant, une paroi du trou débouchant comprend une gorge débouchante (114), le bloc de verrouillage (12) est positionné dans la gorge débouchante (114), le bloc de verrouillage (12) est mobile dans une direction transversale du trou débouchant par rapport au premier cadre de verrouillage (11) et peut se verrouiller au niveau d'au moins un emplacement dans la direction transversale du trou débouchant, le bloc de verrouillage (12) est configuré pour comprimer fermement, conjointement avec la paroi du trou débouchant à l'opposé de la gorge débouchante (114), la seconde tige de support (22) à l'emplacement courant dans la direction axiale.

2. Cadre de support (100) selon la revendication 1, comprenant également un tube de manchon en nylon (14) ayant un diamètre variable, dans lequel le tube de manchon en nylon (14) est disposé dans le trou débouchant où la seconde tige de support (22) est positionnée, et le bloc de verrouillage (12) appuie fermement sur un côté externe du tube de manchon en nylon (14), pour comprimer fermement la seconde tige de support (22) à l'emplacement courant dans la direction axiale.

3. Cadre de support (100) selon la revendication 1, dans lequel le bloc de verrouillage (12) comprend une surface en forme d'arc (12a) correspondant à une forme d'un corps de tige de la seconde tige de support (22).

4. Cadre de support (100) selon l'une quelconque des revendications 1 à 3, dans lequel l'ensemble de verrouillage (1) comprend un élément de raccordement (13), l'élément de raccordement (13) se raccorde entre le bloc de verrouillage (12) et le premier cadre de verrouillage (11), l'élément de raccordement (13) est mobile dans une direction transversale du trou débouchant par rapport au premier cadre de verrouillage (11) et peut se verrouiller au niveau d'au moins un emplacement dans la direction transversale du trou débouchant, l'élément de raccordement (13) est configuré pour amener le bloc de verrouillage (12) à se déplacer dans la direction transversale du trou débouchant et à se verrouiller fermement.

5. Cadre de support (100) selon la revendication 4, dans lequel l'élément de raccordement (13) comprend une vis et une partie de saillie, le bloc de verrouillage (12) et le premier cadre de verrouillage (11) comprennent tous deux un trou débouchant correspondant à la vis et l'un parmi le trou débouchant du bloc de verrouillage (12) et le trou débouchant du premier cadre de verrouillage (11) est un trou fileté, l'autre est un trou lisse, la vis pénètre dans les trous débouchants du bloc de verrouillage (12) et du premier cadre de verrouillage (11) pour se raccorder avec les filetages du trou fileté, la partie de saillie vient en butée contre le trou lisse des trous débouchants du bloc de verrouillage (12) ou du premier cadre de verrouillage (11).

6. Cadre de support (100) selon l'une quelconque des revendications 1 à 3, comprenant également un second cadre de support, dans lequel le second cadre de support est prévu avec au moins un trou débouchant, l'une parmi la première tige de support (21) et la seconde tige de support (22) est fixement raccordée au second cadre de verrouillage (15), l'autre pénètre dans le trou débouchant pour se raccorder, de manière coulissante, avec le second cadre de verrouillage (15).

7. Cadre de support (100) selon l'une quelconque des revendications 1 à 3, dans lequel le cadre de support (100) comprend quatre tiges de support (2), les quatre tiges de support (2) comprennent deux des premières tiges de support (21) et deux des secondes tiges de support (22).

8. Cadre de support (100) selon la revendication 7, dans lequel les secondes tiges de support (22) sont disposées entre les deux des premières tiges de support (21) ou les premières tiges de support (21) sont disposées entre les deux des secondes tiges de support (22).

9. Ensemble poste de stationnement (200) pour un véhicule aérien sans pilote, UAV, l'ensemble poste de stationnement (200) comprenant une base de support (101) et un cadre de support (100) selon l'une des revendications précédentes,
dans lequel au moins l'une parmi la première tige de support (21) ou la seconde tige de support (22) du cadre de support (100) est raccordée avec la base de support (101).

10. Véhicule aérien sans pilote, UAV, comprenant un corps d'aéronef (201) et un ensemble poste de stationnement (200),
l'ensemble poste de stationnement (200) comprenant une base de support (101) et un cadre de support (100), le cadre de support (100) comprenant un ensemble de verrouillage (1) et au moins deux tiges de support (2), l'ensemble de verrouillage (1) comprenant un premier cadre de verrouillage (11) et un bloc de verrouillage (12), dans lequel les au moins deux tiges de support (2) sont disposées sur le premier cadre de verrouillage (11), le premier cadre de verrouillage (11) peut coulisser par rapport à et le long d'au moins l'une des tiges de support (2), les au moins deux tiges de support (2) comprennent au moins une première tige de support (21) et au moins une seconde tige de support (22), le bloc de verrouillage (12) est configuré pour se déplacer dans une direction perpendiculaire à une direction axiale de la seconde tige de support (22) et pour appuyer fermement sur la seconde tige de support (22), afin de verrouiller la seconde tige de support (22) dans un emplacement courant par rapport à une direction axiale de la première tige de support (21),
dans lequel au moins l'une parmi la première tige de support (21) ou la seconde tige de support (22) du cadre de support (100) est raccordée avec la base de support (101),
et dans lequel dans l'ensemble poste de stationnement (200), la tige de support non raccordée avec la base de support (101) est raccordée avec le corps d'aéronef (201).
